# FASCICULE DE BREVET EUROPEEN

(11) **EP 3 541 638 B1**
(45) Date de publication et mention de la délivrance du brevet: **12.08.2020**
(21) Numéro de dépôt: 17811637.2
(22) Date de dépôt: 17.11.2017
(51) Int. Cl.: B60C 9/20, B60C 11/03

(54) **SOMMET DE PNEUMATIQUE POUR VEHICULE LOURD DE TYPE GENIE CIVIL**
REIFENLAUFFLÄCHE FÜR EIN SCHWERLASTFAHRZEUG FÜR DEN TIEFBAU
TYRE CROWN FOR A HEAVY DUTY CIVIL ENGINEERING VEHICLE

(30) Priorité: 21.11.2016 FR 1661293
(43) Date de publication de la demande: 25.09.2019
(73) Titulaire: Compagnie Générale des Etablissements Michelin, 63000 Clermont-Ferrand (FR)
(72) Inventeur: DOMINGO, Alain, 63040 Clermont-Ferrand Cedex 9 (FR); SPINNLER, Olivier, 63040 Clermont-Ferrand Cedex 9 (FR)
(74) Mandataire: Millanvois, Patrick Jacques Jean
(86) Numéro de dépôt international: PCT/FR2017/053145
(87) Numéro de publication internationale: WO 2018/091837

(56) Documents cités:
- FR-A1- 3 018 734
- FR-A1- 3 020 016
- FR-A1- 3 033 287

## Description

La présente invention concerne un pneumatique radial, destiné à équiper un véhicule lourd de type génie civil et, plus particulièrement, le sommet d'un tel pneumatique.

Un pneumatique radial pour véhicule lourd de type génie civil est destiné à être monté sur une jante dont le diamètre nominal, au sens de la norme ETRTO (European Tyre and Rim Technical Organisation), est au moins égal à 25 pouces. Bien que non limitée à ce type d'application, l'invention est plus particulièrement décrite en référence à un pneumatique radial de grande dimension, destiné, par exemple, à être monté sur un dumper, véhicule de transport de matériaux extraits de carrières ou de mines de surface. Par pneumatique radial de grande dimension, on entend un pneumatique destiné à être monté sur une jante dont le diamètre nominal est au moins égal à 49 pouces et peut atteindre 57 pouces, voire 63 pouces.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien.

Dans ce qui suit, les expressions «radialement intérieur », respectivement « radialement extérieur» signifient «plus proche », respectivement «plus éloigné de l'axe de rotation du pneumatique». Par «axialement intérieur », respectivement « axialement extérieur», on entend «plus proche », respectivement «plus éloigné du plan équatorial du pneumatique», le plan équatorial du pneumatique étant le plan passant par le milieu de la surface de roulement du pneumatique et perpendiculaire à l'axe de rotation du pneumatique.

Un pneumatique radial comprend radialement de l'extérieur vers l'intérieur une bande de roulement, une armature de sommet et une armature de carcasse. L'ensemble constitué par la bande de roulement et l'armature de sommet est le sommet du pneumatique.

La bande de roulement est la partie du sommet du pneumatique destinée à entrer en contact avec un sol par l'intermédiaire d'une surface de roulement et à être usée. La bande de roulement comprend au moins un matériau élastomérique et un système plus ou moins complexe de découpures séparant des éléments en relief, appelé sculpture, pour assurer notamment une performance satisfaisante en adhérence.

Les découpures de la bande de roulement peuvent avoir tout type d'orientation par rapport à la direction circonférentielle du pneumatique. On distingue usuellement les découpures longitudinales ou circonférentielles formant, avec la direction circonférentielle, un angle au plus égal à 45°, et les découpures axiales ou transversales formant, avec la direction circonférentielle, un angle au moins égal à 45°. Parmi les découpures, on distingue les rainures et les incisions. Une rainure est une découpure définissant un espace délimité par des parois de matière en regard et distantes l'une de l'autre, de telle sorte que lesdites parois ne peuvent pas venir en contact l'une avec l'autre lors du passage de la bande de roulement dans le contact avec le sol, lorsque le pneumatique est en roulage sous des conditions de charge et de pression nominales recommandées. Une incision est une découpure définissant un espace délimité par des parois de matière venant en contact l'une avec l'autre lors du roulage.

La bande de roulement est généralement caractérisée géométriquement par une largeur axiale W_{T} et une épaisseur radiale H_{T}. La largeur axiale W_{T} est définie comme la largeur axiale de la surface de contact de la bande de roulement du pneumatique neuf avec un sol lisse, le pneumatique étant soumis à des conditions de pression et de charge telles que recommandées, par exemple, par la norme E.T.R.T.O. (European Tyre and Rim Technical Organization). L'épaisseur radiale H_{T} est définie, par convention, comme la profondeur radiale maximale mesurée dans les découpures. Dans le cas d'un pneumatique pour véhicule lourd de type génie civil, et à titre d'exemple, la largeur axiale W_{T} est au moins égale à 600 mm et l'épaisseur radiale H_{T} est au moins égale à 60 mm.

La bande de roulement est également souvent caractérisée par un taux d'entaillement volumique TEV, égal au rapport entre le volume total V_{D} des découpures, mesuré sur le pneumatique libre c'est-à-dire non monté et non gonflé, et la somme du volume total V_{D} des découpures et du volume total V_{R} des éléments en relief délimités par ces découpures. La somme V_{D}+V_{R} correspond au volume compris radialement entre la surface de roulement et une surface de fond, translatée de la surface de roulement radialement vers l'intérieur d'une distance radiale égale à l'épaisseur radiale H_{T} de la bande de roulement. Ce taux d'entaillement volumique TEV, exprimé en %, conditionne en particulier la performance en usure, par le volume de gomme à user disponible, et la performance en adhérence longitudinale et transversale, par la présence d'arêtes respectivement transversales et longitudinales et de découpures ayant la capacité de stocker ou d'évacuer l'eau ou la boue.

Dans la présente invention, on appelle découpures efficaces, des découpures dont la profondeur radiale H_{D} est au moins égale à 50% de l'épaisseur radiale H_{T} et dont la largeur W_{D} est au plus égale à 20% de leur profondeur radiale H_{D} et. Ce sont des découpures étroites de type incisions, c'est-à-dire définissant un espace délimité par des parois de matière venant en contact l'une avec l'autre lors du roulage, cet espace étant toutefois suffisamment large pour permettre une circulation d'air dans lesdites découpures efficaces.

Ces découpures efficaces, ayant une longueur cumulée L_{D}, mesurée sur une surface radialement extérieure de la bande roulement, permettent de définir un taux de lamellisation surfacique TL, exprimé en m/m², égal au rapport entre la longueur cumulée L_{D} des découpures efficaces et l'aire A de la surface radialement extérieure de la bande de roulement égale à 2ΠR_{E}^{∗}W_{T}, où R_{E} est le rayon extérieur du pneumatique.

Radialement à l'intérieur de la bande de roulement, l'armature de sommet d'un pneumatique radial pour véhicule lourd de type génie civil comprend une superposition de couches de sommet s'étendant circonférentiellement, radialement à l'intérieur de la bande de roulement et à l'extérieur de l'armature de carcasse. Chaque couche de sommet est constituée de renforts généralement métalliques, parallèles entre eux et enrobés d'un matériau élastomérique obtenu par mélangeage appelé communément mélange élastomérique.

Parmi les couches de sommet, on distingue usuellement les couches de protection, constitutives de l'armature de protection et radialement les plus extérieures, les couches de travail, constitutives de l'armature de travail et radialement intérieures à l'armature de protection, et les couches de frettage, le plus souvent radialement comprises entre l'armature de travail et l'armature de carcasse mais pouvant être radialement comprises entre deux couches de travail ou radialement comprises entre l'armature de protection et l'armature de travail.

L'armature de protection, comprenant au moins deux couches de protection, protège essentiellement les couches de travail des agressions mécaniques ou physico-chimiques, susceptibles de se propager à travers la bande de roulement radialement vers l'intérieur du pneumatique. L'armature de protection est souvent constituée de deux couches de protection, radialement superposées, formées de renforts métalliques élastiques, parallèles entre eux dans chaque couche et croisés d'une couche à la suivante, en formant, avec la direction circonférentielle, des angles dont la valeur absolue est généralement comprise entre 15° et 45°, et de préférence comprise entre 20° et 40°.

L'armature de travail, comprenant au moins deux couches de travail, a pour fonction de ceinturer le pneumatique et de donner de la rigidité et de la tenue de route au pneumatique. L'armature de travail reprend à la fois des sollicitations mécaniques de gonflage, générées par la pression de gonflage du pneumatique et transmises par l'armature de carcasse, et des sollicitations mécaniques de roulage, générées par le roulage du pneumatique sur un sol et transmises par la bande roulement. L'armature de travail doit en outre résister à l'oxydation et aux chocs et perforations, grâce à sa conception intrinsèque et à celle de l'armature de protection. L'armature de travail est constituée usuellement de deux couches de travail, radialement superposées, formées de renforts métalliques inextensibles, parallèles entre eux dans chaque couche et croisés d'une couche à la suivante, en formant, avec la direction circonférentielle, des angles dont la valeur absolue est généralement comprise entre 15° et 45°, et de préférence comprise entre 15° et 40°.

L'armature de frettage, comprenant au moins une couche de frettage, limite les déformations radiales du sommet au gonflage et contribue à la rigidification du sommet. L'armature de frettage est souvent constituée de deux couches de frettage, radialement superposées, formées de renforts métalliques inextensibles ou élastiques, parallèles entre eux dans chaque couche et croisés d'une couche à la suivante, en formant, avec la direction circonférentielle, des angles dont la valeur absolue est au plus égale à 15°, de préférence au plus égale à 8°.

Un renfort métallique est caractérisé mécaniquement par une courbe représentant la force de traction (en N), appliquée au renfort métallique, en fonction de l'allongement relatif (en %) du renfort métallique, dite courbe force-allongement. De cette courbe force-allongement sont déduites des caractéristiques mécaniques en traction, telles que l'allongement structural As (en %), l'allongement total à la rupture At (en %), la force à la rupture Fm (charge maximale en N) et la résistance à la rupture Rm (en MPa), ces caractéristiques étant mesurées selon la norme ISO 6892 de 1984.

L'allongement total à la rupture At du renfort métallique est, par définition, la somme de ses allongements structural, élastique et plastique (At = As + Ae + Ap). L'allongement structural As résulte du positionnement relatif des fils métalliques constitutifs du renfort métallique sous un faible effort de traction. L'allongement élastique Ae résulte de l'élasticité même du métal des fils métalliques, constituant le renfort métallique, pris individuellement et satisfaisant la loi de Hooke. L'allongement plastique Ap résulte de la plasticité, c'est-à-dire de la déformation irréversible au-delà de la limite d'élasticité du métal des fils métalliques pris individuellement. Ces différents allongements ainsi que leurs significations respectives, bien connus de l'homme du métier, sont décrits, par exemple, dans les documents US5843583, WO2005/014925 et WO2007/090603.

On définit également, en tout point de la courbe force-allongement, un module en extension (en GPa) qui représente la pente de la droite tangente à la courbe force-allongement en ce point. En particulier, on appelle module élastique en extension ou module de Young, le module en extension de la partie linéaire élastique de la courbe force-allongement.

Parmi les renforts métalliques, on distingue usuellement les renforts métalliques élastiques, tels que ceux le plus souvent utilisés dans les couches de protection, et les renforts métalliques inextensibles, tels que ceux généralement utilisés dans les couches de travail.

Un renfort métallique élastique est caractérisé par un allongement structural As au moins égal à 1% et un allongement total à rupture At au moins égal à 4%. En outre, un renfort métallique élastique a un module élastique en extension au plus égal à 150 GPa, et compris usuellement entre 40 GPa et 150 GPa, de préférence entre 70 GPa et 110 GPa. Sa force à rupture Fm est généralement au moins égale à 500 daN.

Un exemple de renfort métallique élastique est un câble élastique multi torons, c'est-à-dire formé d'un assemblage de plusieurs torons. Un cas particulier mais usuel de câble élastique multi torons est constitué par une couche de torons à deux couches identiques et a une structure du type K^{∗}(M+P), K étant le nombre de torons à deux couches, M étant le nombre de fils métalliques constituant la couche interne d'un toron et P étant le nombre de fils métalliques constituant la couche externe d'un toron. Un toron à deux couches est usuellement obtenu par enroulement en hélice de P fils constituant une couche externe du toron autour de M fils constituant une couche interne du toron.

Pour un câble élastique multi torons, l'allongement structural As résulte de la construction et de l'aération du câble élastique multi torons, de la construction et de l'aération des torons élémentaires ainsi que de leur élasticité propre, et, le cas échéant, d'une préformation imposée à un ou plusieurs de ces torons et/ou aux fils constitutifs des torons. L'aération du câble résulte, d'une part, de l'aération de chaque toron dépendant de l'écartement des fils du toron par rapport à la direction perpendiculaire à la direction de l'axe du toron, et d'autre part, de l'écartement des torons par rapport à la direction perpendiculaire à la direction de l'axe du câble.

Un renfort métallique inextensible est caractérisé par un allongement total, sous une force de traction égale à 10% de la force à rupture Fm, au plus égal à 0.2%. Par ailleurs, un renfort métallique inextensible a un module élastique en extension compris usuellement entre 150 GPa et 200 GPa.

Concernant l'usage d'un pneumatique pour véhicule lourd de type génie civil, celui-ci est destiné à porter des charges élevées et à rouler sur des pistes recouvertes de cailloux de diverses tailles.

Un roulage sous charge élevée va générer, en particulier dans le sommet du pneumatique, des températures élevées susceptibles d'entraîner des dégradations des composants du sommet, de limiter son endurance, et, par conséquent, la durée de vie du pneumatique. Des températures élevées sont en particulier générées dans l'armature de travail dont les couches de travail peuvent se séparer sous l'action de la chaleur : on parle alors de clivage thermique. La diminution du niveau thermique du sommet du pneumatique pour lutter contre le clivage thermique est une préoccupation constante du concepteur de pneumatique.

Par ailleurs un roulage sur des pistes recouvertes de cailloux, qui vont indenter la bande de roulement, va générer des agressions du sommet du pneumatique par ces indenteurs. Plus précisément, les indenteurs vont d'une part agresser la bande de roulement, d'autre part se coincer, le cas échéant, dans les découpures de la bande de roulement. Le coincement des cailloux dans les découpures de la bande de roulement, appelé usuellement rétention cailloux, est susceptible d'initier des fissures en fond de découpures qui vont se propager radialement vers l'intérieur du sommet du pneumatique pour atteindre l'armature de sommet, et plus précisément l'armature de protection, qui va se dégrader au cours du temps et se rompre : ce qui va réduire la durée de vie du pneumatique. Ce phénomène est d'autant plus marqué que les découpures de la bande de roulement sont nombreuses et/ou ont un volume important, c'est-à-dire que le taux d'entaillement volumique de la bande roulement est élevé, typiquement au moins égal à 12%. Ce problème d'agressions du sommet est donc également une préoccupation du concepteur de pneumatique.

Pour réduire le niveau thermique du sommet du pneumatique, une solution connue est d'entailler la bande de roulement à un niveau suffisant, c'est-à-dire d'avoir un taux d'entaillement volumique élevé, pour abaisser les températures générées dans le sommet à un niveau acceptable. Plus le taux d'entaillement volumique est élevé, plus le niveau thermique du sommet va être diminué, mais plus le sommet risque d'être agressé par les indenteurs présents sur les pistes.

Les documents FR3033287 A1, FR3018734 A1 et FR3020016 A1 décrivent des pneumatiques connus pour véhicules lourds de type génie civil.

Les inventeurs se sont donnés pour objectif de désensibiliser le sommet d'un pneumatique radial pour véhicule lourd de type génie civil aux agressions par des indenteurs, en particulier dans le cas d'une bande de roulement à taux d'entaillement volumique élevé.

Cet objectif a été atteint, selon l'invention, par un pneumatique pour véhicule lourd de type génie civil comprenant une bande de roulement et une armature de sommet, radialement intérieure à la bande de roulement:
- la bande de roulement ayant une épaisseur radiale H_{T} au moins égale à 60 mm, comprenant des découpures ayant une profondeur radiale H_{D} et une largeur W_{D}, et des éléments en relief séparés par les découpures,
- au moins une partie des découpures, dites découpures efficaces, ayant une profondeur radiale H_{D} au moins égale à 50% de l'épaisseur radiale H_{T} et une largeur W_{D} au plus égale à 20% de la profondeur radiale H_{D},
- l'armature de sommet comprenant une armature de protection, une armature de travail et une armature de frettage,
- l'armature de protection radialement la plus extérieure, comprenant deux couches de protection, en contact l'une avec l'autre sur une largeur axiale médiane W_{C}, comprenant des renforts métalliques élastiques, formant, avec la direction circonférentielle, un angle compris entre 15° et 45°, chaque couche de protection ayant une résistance à rupture R par unité de largeur de couche, exprimée en daN/m, Rₘₐₓ étant la valeur maximale des résistances à rupture R des couches de protection,
- l'armature de travail comprenant au moins deux couches de travail, comprenant des renforts métalliques inextensibles, croisés d'une couche de travail à la suivante et formant, avec une direction circonférentielle du pneumatique, un angle compris entre 15° et 45°,
- l'armature de frettage, comprenant au moins une couche de frettage, comprenant des renforts métalliques, formant, avec la direction circonférentielle un angle au plus égal à 15°,
- le taux de lamellisation surfacique médian TL_{C} de la bande de roulement, défini comme le rapport entre la longueur cumulée L_{DC} des découpures efficaces, présentes sur une portion médiane de bande de roulement ayant une largeur axiale égale à Wc, et une aire médiane A_{C} de la surface radialement extérieure de la bande de roulement égale à 2ΠR_{E}^{∗}W_{C}, où R_{E} est le rayon extérieur du pneumatique, étant au moins égal à 5 m/m²
- et le ratio de couplage C_{C}, défini comme le rapport entre la valeur maximale Rₘₐₓ des résistances à rupture R des couches de protection et le taux de lamellisation surfacique médian TL_{C} de la bande de roulement, étant au moins égal à 18000 daN.

Un taux de lamellisation surfacique médian TL_{C} de la bande de roulement minimum, c'est-à-dire une longueur cumulée L_{DC} minimale des découpures efficaces, présentes sur une portion médiane de bande de roulement ayant une largeur axiale égale à W_{C}, par unité de surface, garantit une ventilation minimale des découpures efficaces de la portion médiane de la bande de roulement, donc un refroidissement de la bande de roulement et, par conséquent, une diminution des températures internes du sommet, qui sont élevées dans la portion médiane, du fait des fortes pressions de contact avec le sol dans cette zone. Il est à noter qu'une diminution du niveau thermique permet ainsi d'augmenter la productivité du transport des matériaux par des véhicules équipés de tels pneumatiques.

La portion médiane de bande de roulement est définie conventionnellement comme la portion de bande de roulement, symétrique par rapport au plan équatorial du pneumatique, et à l'aplomb de la portion d'armature de protection, appelée également portion de couplage de l'armature de protection, sur laquelle les deux couches de protection sont en contact l'une avec l'autre sur une largeur axiale égale à W_{C}. Il est à noter que, usuellement, dans le domaine des pneumatiques pour véhicule lourd de type génie civil, la largeur axiale W_{C} est sensiblement égale à 0.6 fois la largeur axiale totale W_{T} de la bande de roulement, et sensiblement égale à 0.9 fois la largeur axiale de la couche de protection la plus étroite, généralement radialement la plus extérieure dans l'armature de protection.

Ce taux de lamellisation surfacique médian TL_{C} est déterminé sur le pneumatique à l'état neuf. Toutefois, après 50% d'usure de la bande de roulement, c'est-à-dire lorsque l'épaisseur radiale de la bande roulement est égale à H_{T}/2, le taux de lamellisation surfacique médian TL_{C}, déterminé sur le pneumatique à mi-usure, reste sensiblement égal au taux de lamellisation surfacique médian TL_{C} déterminé sur le pneumatique à l'état neuf. Ceci garantit la pérennité de la performance d'adhérence du pneumatique au cours de sa vie.

Un ratio de couplage C_{C}, défini comme le rapport entre la valeur maximale Rₘₐₓ des résistances à rupture R des couches de protection et le taux de lamellisation surfacique médian TL_{C} de la bande de roulement, minimal est nécessaire à la résistance mécanique de l'armature de protection, pour un taux de lamellisation surfacique médian TL_{C} donné. En d'autres termes, en raison de la présence de découpures dans la portion médiane de bande de roulement, particulièrement sensible aux agressions du fait des fortes de pressions de contact avec le sol dans cette zone, l'armature de protection doit avoir une résistance à rupture suffisante.

Par conséquent, la combinaison de ces deux caractéristiques essentielles permet d'obtenir un compromis satisfaisant entre le niveau thermique du sommet et la résistance aux agressions du sommet susceptibles d'initier des fissurations à partir de la bande de roulement radialement vers l'intérieur du sommet du pneumatique, en particulier dans la portion médiane de bande de roulement, zone de fortes pressions de contact avec le sol.

Préférentiellement le ratio de couplage C_{C} est au moins égal à 24000 daN. Un ratio de couplage C_{C} plus élevé renforce la résistance aux agressions du sommet, donc autorise un usage sur des sols encore plus agressifs à même niveau de refroidissement du sommet.

Plus préférentiellement le ratio de couplage C_{C} est au plus égal à 72000 daN. Au-delà de ce ratio de couplage, la valeur maximale Rₘₐₓ des résistances à rupture R des couches de protection nécessite, au niveau de l'armature de protection, un niveau de renforcement pouvant être obtenu avec des renforts métalliques de gros diamètre, impliquant des couches de protection de fortes épaisseurs, susceptibles de dégrader le niveau thermique du sommet.

Avantageusement le taux de lamellisation surfacique médian TL_{C} de la bande de roulement est au moins égal à 5.8 m/m². La ventilation des découpures efficaces de la bande de roulement est améliorée par un taux de lamellisation surfacique médian TL_{C} plus élevé.

Encore avantageusement le taux de lamellisation surfacique médian TL_{C} de la bande de roulement est au plus égal à 15 m/m². Au-delà de cette valeur, la longueur cumulée L_{DC} de découpures efficaces, présentes sur une portion médiane de bande de roulement ayant une largeur axiale égale à W_{C}, par unité de surface, et par conséquent le nombre de découpures efficaces par unité de surface de la portion médiane de bande de roulement, risque de sensibiliser la bande de roulement aux agressions à un niveau inacceptable. D'une part, le nombre de zones d'initiation de fissures en fond de découpures devient important. D'autre part, du fait du grand nombre de découpures, les dimensions des éléments en relief diminuent et donc leurs rigidités diminuent, ce qui augmente le risque d'arrachement des éléments en relief.

Avantageusement le taux de lamellisation surfacique médian circonférentiel TL_{CX} de la bande de roulement, défini comme le rapport entre la somme des projections, sur la direction circonférentielle, des longueurs des découpures efficaces, présentes sur une portion médiane de bande de roulement ayant une largeur axiale égale à W_{C}, et une aire médiane A_{C} de la surface radialement extérieure de la bande de roulement égale à 2ΠR_{E}^{∗}W_{C}, où R_{E} est le rayon extérieur du pneumatique, est au moins égal à 2.5 m/m². Cette caractéristique garantit, en particulier, une adhérence transversale satisfaisante sur un sol faiblement boueux, ce qui est particulièrement utile pour un roulage sur des pistes sinueuses.

Encore avantageusement le taux de lamellisation surfacique médian axial TL_{CY} de la bande de roulement, défini comme le rapport entre la somme des projections, sur la direction axiale, des longueurs des découpures efficaces, présentes sur une portion médiane de bande de roulement ayant une largeur axiale égale à Wc, et une aire médiane A_{C} de la surface radialement extérieure de la bande de roulement égale à 2ΠR_{E}^{∗}W_{C}, où R_{E} est le rayon extérieur du pneumatique, est au moins égal à 3.5 m/m2. Cette caractéristique garantit, en particulier, une adhérence longitudinale satisfaisante sur un sol faiblement boueux, ce qui est particulièrement utile pour un roulage en montée sur un sol pentu.

La combinaison d'un taux de lamellisation surfacique médian circonférentiel TL_{CX} et d'un taux de lamellisation surfacique médian axial TL_{CY} de la bande de roulement suffisamment élevés permet en plus une répartition plus homogène des découpures, améliorant ainsi la ventilation de la bande de roulement.

Sur la portion médiane de bande de roulement de largeur axiale W_{C}, le taux d'entaillement volumique médian TEV_{C}, exprimé en %, égal au rapport entre le volume total V_{DC} des découpures de la portion médiane et la somme du volume total V_{DC} des découpures de la portion médiane et du volume total V_{RC} des éléments en relief de la portion médiane, est avantageusement au plus égal au taux d'entaillement volumique global TEV, de préférence au plus égal à 0.7 fois le taux d'entaillement volumique global TEV. Le taux d'entaillement volumique global TEV est défini sur toute la largeur axiale W_{T} de la bande de roulement et est égal au rapport entre le volume total V_{D} des découpures et la somme du volume total V_{D} des découpures et du volume total V_{R} des éléments en relief. Un taux d'entaillement volumique médian TEV_{C} limité résulte le plus souvent d'une épaisseur limitée des découpures de la portion médiane, lesdites découpures d'épaisseur limitée permettant d'avoir une ventilation suffisante de la bande de roulement sans sensibiliser la bande de roulement aux agressions.

Le taux d'entaillement volumique global TEV est avantageusement au moins égal à 12%, de préférence au moins égal à 14%. Ceci garantit un volume suffisant de découpures permettant d'assurer une ventilation thermique efficace de la bande roulement, et donc un refroidissement du sommet du pneumatique. Un tel taux d'entaillement volumique global TEV garantit une bonne adhérence sur sol fortement boueux.

Sur la largeur axiale totale W_{T} de la bande de roulement, le taux de lamellisation surfacique global TL de la bande de roulement, défini comme le rapport entre la longueur cumulée L_{D} des découpures efficaces, présentes sur toute la largeur axiale W_{T} de la bande de roulement, et l'aire de la surface radialement extérieure de la bande de roulement égale à 2ΠR_{E}^{∗}W_{T}, où R_{E} est le rayon extérieur du pneumatique, est avantageusement au moins égal à 3 m/m².

La valeur maximale Rₘₐₓ des résistances à rupture R des couches de protection est avantageusement au moins égale à 150000 daN/m, de préférence au moins égale à 160000 daN/m. Ceci permet de garantir une tenue aux coupures satisfaisante des couches de protection concernées.

Selon un premier mode de réalisation avantageux de l'armature de protection, la résistance à rupture R de la couche de protection la plus radialement extérieure est égale à la valeur maximale Rₘₐₓ des résistances à rupture R des couches de protection. La couche de protection la plus radialement extérieure est la première barrière à la pénétration des indenteurs. Ceci permet d'optimiser la résistance aux coupures de l'armature de protection.

Selon un deuxième mode de réalisation préféré de l'armature de protection, la résistance à rupture R de chaque couche de protection est égale à la valeur maximale Rₘₐₓ des résistances à rupture R des couches de protection. Ceci permet de maximiser la résistance aux coupures de l'armature de protection.

Selon un troisième mode de réalisation avantageux de l'armature de protection, la valeur minimale Rₘᵢₙ des résistances à rupture R des couches de protection est telle que le ratio Rₘᵢₙ/TL_{C} est au moins égal à 18000 daN. En d'autres termes, toutes les couches de protection ont une résistance à rupture R telle que le ratio Rₘᵢₙ/TL_{C} est au moins égal à 18000 daN. Ceci permet d'obtenir un compromis satisfaisant entre le niveau thermique du sommet et la résistance aux coupures de l'armature de protection.

Selon un mode de réalisation préféré des renforts métalliques des couches de protection, les renforts métalliques élastiques des couches de protection sont des câbles multitorons, constitués d'une unique couche de K torons, K étant compris entre 3 et 5, chaque toron étant constitué de fils métalliques. Ce type de renforts métalliques est caractérisé par une bonne aptitude à la pénétration d'un mélange élastomérique d'enrobage, ce qui garantit une bonne tenue à la corrosion et donc une amélioration de l'endurance de l'armature de protection.

Selon une première variante du mode de réalisation préféré des renforts métalliques des couches de protection, chaque toron, de formule (M+P), comprend une couche interne de M fils métalliques et une couche externe de P fils métalliques enroulée autour de la couche interne. Chaque toron est ainsi constitué de deux couches concentriques de fils métalliques.

Selon un exemple particulier de la première variante du mode de réalisation préféré des renforts métalliques des couches de protection, les renforts métalliques élastiques des couches de protection sont des câbles multitorons, de formule 4^{∗}(3+8)^{∗}0.35, constitués d'une unique couche de 4 torons, chaque toron comprenant une couche interne de 3 fils métalliques et une couche externe de 8 fils métalliques enroulée autour de la couche interne, et chaque toron étant constitués de fils métalliques de diamètre égal à 0.35 mm.

Selon un autre exemple particulier de la première variante du mode de réalisation préféré des renforts métalliques des couches de protection, les renforts métalliques élastiques des couches de protection sont des câbles multitorons, de formule 4^{∗}(4+9)^{∗}0.26, constitués d'une unique couche de 4 torons, chaque toron comprenant une couche interne de 4 fils métalliques et une couche externe de 9 fils métalliques enroulée autour de la couche interne, et chaque toron étant constitués de fils métalliques de diamètre égal à 0.26 mm.

Selon une deuxième variante du mode de réalisation préféré des renforts métalliques des couches de protection, chaque toron, de formule (M+N+P), comprend une couche intermédiaire de N fils métalliques enroulée autour de la couche interne de M fils métalliques, la couche externe de P fils métalliques étant enroulée autour de la couche intermédiaire de N fils métalliques. Chaque toron est ainsi constitué de trois couches concentriques de fils métalliques.

Préférentiellement la couche externe de P fils métalliques est insaturée. Par définition, une couche insaturée de fils est telle qu'il existe suffisamment de place dans cette couche pour y ajouter au moins un (P+1)ième fil du même diamètre que les P fils de la couche, plusieurs fils pouvant alors être au contact les uns des autres.

Egalement préférentiellement le diamètre des fils constitutifs de chaque toron est au moins égal à 0.22 mm, de préférence au moins égal à 0.26 mm.

Les renforts métalliques élastiques des couches de protection présentent, au test de perméabilité à l'air, un débit d'air moyen inférieur à 30 cm³/min. Ce critère caractérise la pénétration des renforts métalliques de type câbles métalliques par le mélange élastomérique d'enrobage. Plus ce débit d'air moyen est faible, plus les câbles métalliques sont pénétrés, ce qui améliore leur tenue en endurance, compte tenu d'une faible circulation d'air, et donc d'oxygène, facteur de corrosion, à l'intérieur des renforts.

Concernant le test de perméabilité à l'air, ce test permet de déterminer la perméabilité longitudinale à l'air des câbles métalliques testés, par mesure du volume d'air traversant une éprouvette sous pression constante pendant un temps donné. Le principe d'un tel test, bien connu de l'homme du métier, est de démontrer l'efficacité du traitement d'un câble métallique pour le rendre imperméable à l'air ; il a été décrit par exemple dans la norme ASTM D2692-98.

Le test est réalisé soit sur des câbles métalliques extraits des pneumatiques, donc déjà enrobés de l'extérieur par un mélange élastomérique ou composition de caoutchouc à l'état cuit, soit sur des câbles métalliques bruts de fabrication.

Dans le second cas, les câbles métalliques bruts doivent être préalablement enrobés de l'extérieur par une composition de caoutchouc dite gomme d'enrobage. Pour cela, une série de 10 câbles disposés parallèlement (distance inter-câble : 20 mm) est placée entre deux skims (deux rectangles de 80 x 200 mm) d'une composition de caoutchouc à l'état cru, chaque skim ayant une épaisseur de 3,5 mm ; le tout est alors bloqué dans un moule, chacun des câbles métallique étant maintenu sous une tension suffisante (par exemple 2 daN) pour garantir sa rectitude lors de la mise en place dans le moule, à l'aide de modules de serrage ; puis on procède à la vulcanisation (cuisson) pendant 40 min à une température de 140°C et sous une pression de 15 bar (piston rectangulaire de 80 x 200 mm). Après quoi, on démoule l'ensemble et on découpe 10 éprouvettes de câbles métalliques ainsi enrobés, sous forme de parallélépipèdes de dimensions 7x7x20 mm, pour caractérisation.

On utilise comme gomme d'enrobage une composition de caoutchouc conventionnelle pour pneumatique, à base de caoutchouc naturel (peptisé) et de noir de carbone N330 (65 pce), comportant en outre les additifs usuels suivants: soufre (7 pce), accélérateur sulfénamide (1 pce), ZnO (8 pce), acide stéarique (0,7 pce), antioxydant (1,5 pce), naphténate de cobalt (1,5 pce) (pce signifiant parties en poids pour cent parties d'élastomère) ; le module d'extension à 10% d'allongement E10 de la gomme d'enrobage est de 10 MPa environ.

Le test est réalisé sur 2 cm de longueur de câble métallique, enrobé donc par sa composition de caoutchouc (ou gomme d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm3/min). Pendant la mesure, l'échantillon de câble métallique est bloqué dans un joint étanche comprimé (par exemple un joint en mousse dense ou en caoutchouc) de telle manière que seule la quantité d'air traversant le câble métallique d'une extrémité à l'autre, selon son axe longitudinal, est prise en compte par la mesure ; l'étanchéité du joint étanche lui-même est contrôlée préalablement à l'aide d'une éprouvette de caoutchouc pleine, c'est-à-dire sans câble.

Le débit d'air moyen mesuré (moyenne sur les 10 éprouvettes) est d'autant plus faible que l'imperméabilité longitudinale du câble métallique est élevée. La mesure étant faite avec une précision de ± 0,2 cm3/min, les valeurs mesurées inférieures ou égales à 0,2 cm3/min sont considérées comme nulles ; elles correspondent à un câble métalliques qui peut être qualifié d'étanche (totalement étanche) à l'air selon son axe (c'est-à-dire dans sa direction longitudinale).

Selon un mode de réalisation avantageux des couches de protection, les renforts métalliques élastiques des couches de protection sont répartis à un pas moyen compris entre 3.5 mm et 6 mm.

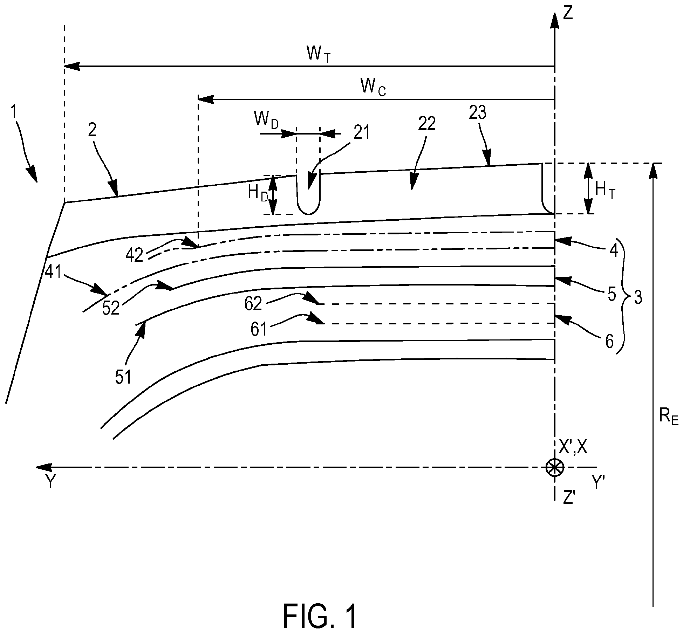

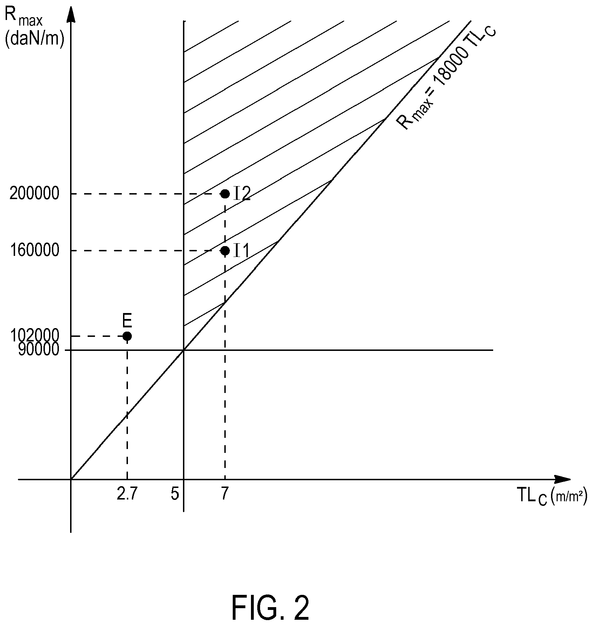

Les caractéristiques de l'invention seront mieux comprises à l'aide des figures 1 et 2, schématiques et non à l'échelle :
- figure 1: demi-coupe, dans un plan méridien, d'un sommet de pneumatique pour véhicule lourd de type génie civil, selon
- figure 2: domaine des résistances à rupture maximales Rₘₐₓ en fonction du taux de lamellisation surfacique médian TL_{C} de la bande de roulement pour un pneumatique pour véhicule lourd de type génie civil, selon l'invention.

Sur la figure 1, est représentée une demi-coupe méridienne, dans un plan YZ du sommet d'un pneumatique 1 pour véhicule lourd de type génie civil comprenant une bande de roulement 2 et une armature de sommet 3, radialement intérieure à la bande de roulement 2. La bande de roulement 2, ayant une épaisseur radiale H_{T} au moins égale à 60 mm, comprend des découpures 21, ayant une largeur W_{D} et une profondeur radiale H_{D}, et des éléments en relief 22, séparés par les découpures 21. La bande de roulement 2 comprend une portion médiane, positionnée à l'aplomb d'une portion de l'armature de protection 4, ayant une largeur axiale W_{C} sur laquelle les deux couches de protection (41, 42) sont en contact l'une avec l'autre. Les découpures 21, dont la largeur W_{D} est au plus égale à 20% de la profondeur radiale H_{D} et dont la profondeur radiale H_{D} est au moins égale à 50% de l'épaisseur radiale H_{T}, dites découpures efficaces, présentes sur la portion médiane de bande de roulement 2 de longueur W_{C}, ont une longueur cumulée L_{DC} (non représentée sur la figure), mesurée sur une surface radialement extérieure 23 de la bande roulement 2. Cette longueur cumulée L_{DC} permet de définir un taux de lamellisation surfacique médian TL_{C}, exprimé en m/m², égal au rapport entre la longueur cumulée L_{DC} et l'aire médiane A_{C} de la surface radialement extérieure 23 de la bande de roulement égale à 2ΠR_{E}^{∗}W_{C}, où R_{E} est le rayon extérieur du pneumatique mesuré dans le plan équatorial XZ, entre l'axe de révolution YY' et la surface radialement extérieure 23 de la bande de roulement 2 ou surface de roulement. Radialement à l'intérieur de la bande de roulement 2, l'armature de sommet 3 comprend une armature de protection 4, une armature de travail 5 et une armature de frettage 6. L'armature de protection 4, radialement la plus extérieure, comprend deux couches de protection (41, 42), formées de renforts métalliques élastiques, formant, avec la direction circonférentielle XX', un angle compris entre 15° et 45°. Chaque couche de protection (41, 42) a une résistance à rupture R par unité de largeur de couche, exprimée en daN/m, Rₘₐₓ étant la valeur maximale des résistances à rupture R des couches de protection (41, 42). L'armature de travail 5 comprend deux couches de travail (51, 52), formées de renforts métalliques inextensibles, croisés d'une couche de travail à la suivante et formant, avec la direction circonférentielle XX', un angle compris entre 15° et 45°. L'armature de frettage 6 comprend deux couches de frettage (61, 62), formées de renforts métalliques, formant, avec la direction circonférentielle XX', un angle au plus égal à 15°.

La figure 2 représente le domaine des résistances à rupture maximales Rₘₐₓ en fonction du taux de lamellisation surfacique médian TL_{C} de la bande de roulement d'un pneumatique pour véhicule lourd de type génie civil selon l'invention. Selon l'invention, le taux de lamellisation surfacique médian TL_{C} de la bande de roulement est au moins égal à 5 m/m² et un ratio de couplage C_{C}, égal au rapport entre la valeur maximale Rₘₐₓ des résistances à rupture R des couches de protection et le taux de lamellisation surfacique médian TL_{C} de la bande de roulement 2, est au moins égal à 18000 daN. Par conséquent, le domaine de l'invention est défini par les résistances à rupture maximales Rₘₐₓ au moins égales à 18000^{∗}TL_{C}, avec TL_{C} au moins égal à 5 m/m². Sur l'axe des abscisses du graphique de la figure 2, est représentée la valeur minimale du taux de lamellisation surfacique médian TL_{C} de la bande de roulement égale à 5 m/m². Sur l'axe des ordonnées du graphique de la figure 2, est représentée la valeur minimale de la résistance maximale Rₘₐₓ des résistances à rupture R des couches de protection égale à 90000 daN/m, correspondant au taux de couplage C_{C} minimal égal à 18000 daN. Sur le graphique sont également représentés un premier exemple de réalisation de l'invention I1 dans lequel le taux de lamellisation surfacique médian TL_{C} est égal à 7 m/m² et la valeur maximale Rₘₐₓ des résistances à rupture R des couches de protection est égale à 160000 daN/m, les couches de protection comprenant des câbles élastiques multitorons de formule 4^{∗}(4+9)^{∗}0.26, et un second exemple de réalisation de l'invention 12 dans lequel le taux de lamellisation surfacique médian TL_{C} est aussi égal à 7 m/m² et la valeur maximale Rₘₐₓ des résistances à rupture R des couches de protection est égale à 200000 daN/m, les couches de protection comprenant des câbles élastiques multitorons de formule 4^{∗}(3+8)^{∗}0.35. Sur la figure 2 est également représenté un exemple de l'état de la technique E caractérisé par un taux de lamellisation surfacique médian TL_{C} égal à 2.7 m/m² et une valeur maximale Rₘₐₓ des résistances à rupture R des couches de protection égale à 102000 daN/m, donc endehors du domaine de l'invention.

L'invention a plus particulièrement été étudiée pour un pneumatique de dimension 40.00R57. Deux exemples de pneumatique selon l'invention I1 et I2 et un pneumatique de l'état de la technique E, pris en référence, ont été comparés par les inventeurs.

Dans le cas étudié, les pneumatiques respectivement de l'état de la technique E et selon l'invention I1 et I2 ont une armature de de sommet comprenant, radialement de l'extérieur vers l'intérieur, une armature de protection constituée par deux couches de protection avec des renforts métalliques élastiques, une armature de travail constituée par deux couches de travail avec des renforts métalliques inextensibles et une armature de frettage constituée par deux couches de frettage avec des renforts métalliques inextensibles. Concernant l'armature de protection, les renforts métalliques élastiques des deux couches de protection, croisés d'une couche à la suivante, forment, avec la direction circonférentielle XX', un angle égal à 24°, pour le pneumatique de l'état de la technique E, et un angle égal à 33°, pour les pneumatique selon l'invention I1 et I2. Concernant l'armature de travail, les renforts métalliques inextensibles des deux couches de travail, croisés d'une couche à la suivante, forment, avec la direction circonférentielle XX', des angles respectivement égaux à 33° et 19°, pour le pneumatique de l'état de la technique E, et des angles respectivement égaux à 33° et 24°, pour les pneumatiques selon l'invention I1 et I2. Concernant l'armature de frettage, les renforts métalliques inextensibles des deux couches de frettage, croisés d'une couche à la suivante, forment, avec la direction circonférentielle XX', un angle compris entre 6° et 8°, pour le pneumatique de l'état de la technique E et pour les pneumatiques selon l'invention I1 et I2.

Dans le cas étudié, les pneumatiques respectivement de l'état de la technique E et selon l'invention I1 et I2 ont des bandes de roulement comprenant au moins trois découpures ou sillons circonférentiels, les découpures ayant une largeur W_{D} au moins égale à 8 mm. Les bandes de roulement correspondantes ont un taux d'entaillement volumique global TEV au moins égal à 12%.

Pour l'exemple étudié en 40.00R57, les caractéristiques du sommet pour le pneumatique de l'état de la technique E pris en référence et pour les pneumatiques selon l'invention I1 et I2 sont présentées dans le tableau 1 ci-dessous :

**Tableau 1**

| **Dimension du pneumatique** | **E (40.00R57)** | **I1 (40.00R57)** | **I2 (40.00R57)** |
|---|---|---|---|
| Largeur axiale W_{T} de la bande de roulement (m) | 0.98 m | 0.98 m | 0.98 m |
| Largeur axiale médiane W_{C} (=0.6 W_{T}) de la bande de roulement (m) | 0.59 m | 0.59 m | 0.59 m |
| Epaisseur radiale H_{T} de la bande de roulement (m) | 0.098 m | 0.098 m | 0.098 m |
| Rayon extérieur R_{E} du pneumatique (m) | 1.79 m | 1.79 m | 1.79 m |
| Aire de la surface de roulement A= 2ΠR_{E}^{∗}W_{T} (m²) | 11 m² | 11 m² | 11 m² |
| Aire médiane de la surface de roulement A_{C}= 2ΠR_{E}^{∗}W_{C} (m²) | 6.6 m² | 6.6 m² | 6.6 m² |
| Longueur cumulée L_{D} des découpures efficaces, sur la largeur axiale totale W_{T} (m) | 17.3 m | 45.8m | 45.8m |
| Longueur cumulée L_{DC} des découpures efficaces, présentes dans la partie médiane de largeur axiale W_{C}(m) | 17.3 m | 45.8m | 45.8m |
| Longueur cumulée L_{DCX} des découpures efficaces, présentes dans la partie médiane, selon la direction circonférentielle (XX') (m) | 11m | 28 m | 28 m |
| Longueur cumulée L_{DCY} des découpures efficaces, présentes dans la partie médiane, selon la direction axiale (YY') (m) | 9.5 m | 33 m | 33 m |
| Taux de lamellisation surfacique global TL = L_{D}/A (m/m²) | 1.6 m/m² | 4.2 m/m² | 4.2 m/m² |
| Taux d'entaillement volumique global TEV (%) | 18.1% | 14.2% | 14.2% |
| Taux de lamellisation surfacique médian TL_{C} = L_{DC}/A_{C} | 2.7 m/m² | 7 m/m² | 7 m/m² |
| Taux de lamellisation surfacique médian circonférentiel TL_{CX} = L_{DCX}/A_{C} | 1.7m/m2 | 4.2m/m2 | 4.2 m/m² |
| Taux de lamellisation surfacique médian axial TL_{CY} = L_{DCY}/A_{C} | 1.4m/m² | 5.0 m/m² | 5.0 m/m² |
| Taux d'entaillement volumique médian TEV_{C} (%) | 16.9 % | 12.0 % | 12.0 % |
| Type de renforts métalliques des couches de protection | 4^{∗}(1+5)^{∗}0.26 | 4^{∗}(4+9)^{∗}0.26 | 4^{∗}(3+8)^{∗}0.35 |
| Pas des renforts métalliques des couches de protection (mm) | 2.5 mm | 3.7 mm | 4.8 mm |
| Valeur maximale Rₘₐₓ des résistances à rupture R des couches de protection (daN/m) | 102000 daN/m | 160000 daN/m | 200000 daN/m |
| Ratio de couplage C_{C}=Rₘₐₓ/TL_{C} (daN) | 37778 daN | 22857 daN | 28571 daN |

Les pneumatiques de l'état de la technique et selon l'invention ont été soumis à des mesures et tests, en particulier pour évaluer le niveau thermique du sommet, lorsque le pneumatique est soumis à des conditions de pression, de charge et de vitesse recommandées, et pour quantifier la résistance à la rupture du sommet, lorsque le pneumatique est soumis à des agressions par des indenteurs.

En ce qui concerne le niveau thermique, la température du sommet est mesurée à proximité des extrémités axiales de l'armature de sommet, qui sont généralement les points chauds du sommet, à l'aide d'une sonde de température. Les résultats de ces mesures thermiques, en termes de températures en extrémités axiales de l'armature de sommet, sont présentés dans le tableau 2 ci-dessous, en valeur relative par rapport au pneumatique de l'état de la technique pris en référence.

Pour caractériser la résistance à la rupture d'une armature de sommet de pneumatique soumise à des chocs, il est connu de l'homme du métier de réaliser des tests consistant à faire rouler un pneumatique, gonflé à une pression recommandée et soumis à une charge recommandée, sur un indenteur cylindrique, appelé polar, de diamètre comprise entre 1 pouce, soit 25.4 mm, et 2.2 pouces, soit 55.9 mm, selon la dimension du pneumatique, et d'une hauteur déterminée. La résistance à la rupture est caractérisée par la hauteur critique du polar, c'est-à-dire la hauteur maximale du polar entraînant une rupture totale de l'armature de sommet, c'est-à-dire de la rupture de toutes les couches de sommet. Les résultats de ces tests d'agression, en termes de hauteurs maximales d'un polar cylindrique de diamètre égal à 2 pouces, sont présentés dans le tableau 2 ci-dessous, par rapport au pneumatique de l'état de la technique pris en référence comme base 100.

Le tableau 2 ci-dessous présente les résultats de performance thermique et de performance en résistance aux agressions pour les pneumatiques de l'état de la technique E et selon l'invention I1 et I2 étudiés:

**Tableau 2**

| **Dimension du pneumatique** | **E (40.00R57)** | **I1 (40.00R57)** | **I2 (40.00R57)** |
|---|---|---|---|
| Performance thermique (températures au niveau des extrémités axiales de l'armature de sommet) | référence | -10°C | -9°C |
| Performance en résistance aux agressions (hauteur maximal du polar cylindrique de diamètre 2 ") | 100 | 140 | 180 |

Selon le tableau 2, le niveau thermique des pneumatiques selon l'invention I1 et I2 est inférieur respectivement de 10° et de 9° par rapport à celui du pneumatique de l'état de la technique E. La performance en résistance aux agressions du sommet des pneumatiques selon l'invention I1 et I2 est respectivement augmentée de 40% et de 80% par rapport à celle du pneumatique de l'état de la technique E.

## Revendications

1. Pneumatique (1) pour véhicule lourd de type génie civil comprenant une bande de roulement (2) et une armature de sommet (3), radialement intérieure à la bande de roulement (2) :
- la bande de roulement (2) ayant une épaisseur radiale H_{T} au moins égale à 60 mm, comprenant des découpures (21) ayant une profondeur radiale H_{D} et une largeur W_{D}, et des éléments en relief (22) séparés par les découpures (21),
- au moins une partie des découpures (21), dites découpures efficaces, ayant une profondeur radiale H_{D} au moins égale à 50% de l'épaisseur radiale H_{T} et une largeur W_{D} au plus égale à 20% de la profondeur radiale H_{D},
- l'armature de sommet (3) comprenant une armature de protection (4), une armature de travail (5) et une armature de frettage (6),
- l'armature de protection (4), radialement la plus extérieure, comprenant deux couches de protection (41, 42), en contact l'une avec l'autre sur une largeur axiale médiane W_{C}, comprenant des renforts métalliques élastiques, formant, avec la direction circonférentielle (XX'), un angle compris entre 15° et 45°, chaque couche de protection (41, 42) ayant une résistance à rupture R par unité de largeur de couche, exprimée en daN/m, Rₘₐₓ étant la valeur maximale des résistances à rupture R des couches de protection (41, 42),
- l'armature de travail (5) comprenant au moins deux couches de travail (51, 52), comprenant des renforts métalliques inextensibles, croisés d'une couche de travail à la suivante et formant, avec une direction circonférentielle (XX') du pneumatique, un angle compris entre 15° et 45°,
- l'armature de frettage (6), comprenant au moins une couche de frettage (61, 62), comprenant des renforts métalliques, formant, avec la direction circonférentielle (XX'), un angle au plus égal à 15°,
**caractérisé en ce que** le taux de lamellisation surfacique médian TL_{C} de la bande de roulement (2), défini comme le rapport entre la longueur cumulée L_{DC} des découpures efficaces (21), présentes sur une portion médiane de bande de roulement (2) ayant une largeur axiale égale à W_{C}, et une aire médiane A_{C} de la surface radialement extérieure (23) de la bande de roulement (2) égale à 2ΠR_{E}^{∗}W_{C}, où R_{E} est le rayon extérieur du pneumatique, est au moins égal à 5 m/m² **et en ce que** le ratio de couplage C_{C}, défini comme le rapport entre la valeur maximale Rₘₐₓ des résistances à rupture R des couches de protection (41, 42) et le taux de lamellisation surfacique médian TL_{C} de la bande de roulement (2), est au moins égal à 18000 daN.

2. Pneumatique (1) pour véhicule lourd de type génie civil selon la revendication 1, **dans lequel** le ratio de couplage C_{C} est au moins égal à 24000 daN.

3. Pneumatique (1) pour véhicule lourd de type génie civil selon l'une des revendications 1 ou 2, **dans lequel** le ratio de couplage C_{C} est au plus égal à 72000 daN.

4. Pneumatique (1) pour véhicule lourd de type génie civil selon l'une quelconque des revendications 1 à 3, **dans lequel** le taux de lamellisation surfacique médian TL_{C} est au moins égal à 5.8 m/m².

5. Pneumatique (1) pour véhicule lourd de type génie civil selon l'une quelconque des revendications 1 à 4, **dans lequel** le taux de lamellisation surfacique médian TL_{C} est au plus égal à 15 m/m².

6. Pneumatique (1) pour véhicule lourd de type génie civil selon l'une quelconque des revendications 1 à 5, **dans lequel** le taux de lamellisation surfacique médian circonférentiel TL_{CX} de la bande de roulement (2), défini comme le rapport entre la somme des projections, sur la direction circonférentielle (XX'), des longueurs des découpures efficaces (21), présentes sur une portion médiane de bande de roulement (2) ayant une largeur axiale égale à W_{C}, et une aire médiane A_{C} de la surface radialement extérieure (23) de la bande de roulement (2) égale à 2ΠR_{E}^{∗}W_{C}, où R_{E} est le rayon extérieur du pneumatique, est au moins égal à 2.5 m/m².

7. Pneumatique (1) pour véhicule lourd de type génie civil selon l'une quelconque des revendications 1 à 6, le pneumatique ayant une direction axiale (YY') parallèle à son axe de rotation, **dans lequel** le taux de lamellisation surfacique médian axial TL_{CY} de la bande de roulement (2), défini comme le rapport entre la somme des projections, sur la direction axiale (YY'), des longueurs des découpures efficaces (21), présentes sur une portion médiane de bande de roulement (2) ayant une largeur axiale égale à W_{C}, et une aire médiane A_{C} de la surface radialement extérieure (23) de la bande de roulement (2) égale à 2ΠR_{E}^{∗}W_{C}, où R_{E} est le rayon extérieur du pneumatique, est au moins égal à 3.5 m/m².

8. Pneumatique (1) pour véhicule lourd de type génie civil selon l'une quelconque des revendications 1 à 7, **dans lequel** la valeur maximale Rₘₐₓ des résistances à rupture R des couches de protection (41, 42) est au moins égale à 150000 daN/m, de préférence au moins égale à 160000 daN/m.

9. Pneumatique (1) pour véhicule lourd de type génie civil selon l'une quelconque des revendications 1 à 8, **dans lequel** la résistance à rupture R de la couche de protection (41, 42) la plus radialement extérieure est égale à la valeur maximale Rₘₐₓ des résistances à rupture R des couches de protection (41, 42).

10. Pneumatique (1) pour véhicule lourd de type génie civil selon l'une quelconque des revendications 1 à 9, **dans lequel** la résistance à rupture R de chaque couche de protection (41, 42) est égale à la valeur maximale Rₘₐₓ des résistances à rupture R des couches de protection (41, 42).

11. Pneumatique (1) pour véhicule lourd de type génie civil selon l'une quelconque des revendications 1 à 10, **dans lequel** la valeur minimale Rₘᵢₙ des résistances à rupture R des couches de protection est telle que le ratio Rₘᵢₙ/TL_{C} est au moins égal à 18000 daN.

12. Pneumatique (1) pour véhicule lourd de type génie civil selon l'une quelconque des revendications 1 à 11, **dans lequel** les renforts métalliques élastiques des couches de protection (41, 42) sont des câbles multitorons, constitués d'une unique couche de K torons, K étant compris entre 3 et 5, chaque toron étant constitué de fils métalliques.

## Patentansprüche

1. Reifen (1) für ein schweres Fahrzeug vom Typ eines Baufahrzeugs, welcher einen Laufstreifen (2) und eine Scheitelbewehrung (3) radial innerhalb des Laufstreifens (2) umfasst:
- wobei der Laufstreifen (2) eine radiale Dicke H_{T} aufweist, die mindestens gleich 60 mm ist, und Ausschnitte (21) mit einer radialen Tiefe H_{D} und einer Breite W_{D} und Profilelemente (22), die durch die Ausschnitte (21) getrennt sind, umfasst,
- wobei wenigstens ein Teil der Ausschnitte (21), wirksame Ausschnitte genannt, eine radiale Tiefe H_{D}, die wenigstens gleich 50 % der radialen Dicke H_{T} ist, und eine Breite W_{D}, die höchstens gleich 20 % der radialen Tiefe H_{D} ist, aufweist,
- wobei die Scheitelbewehrung (3) eine Schutzbewehrung (4), eine Arbeitsbewehrung (5) und eine Versteifungsbewehrung (6) umfasst,
- wobei die Schutzbewehrung (4), welche die radial äußerste ist, zwei auf einer medianen axialen Breite W_{C} miteinander in Kontakt befindliche Schutzschichten (41, 42) umfasst, die elastische metallische Festigkeitsträger umfassen, die mit der Umfangsrichtung (XX') einen Winkel zwischen 15° und 45° bilden, wobei jede Schutzschicht (41, 42) eine Bruchfestigkeit R pro Breiteneinheit der Schicht aufweist, die in daN/m ausgedrückt wird, wobei Rₘₐₓ der maximale Wert der Bruchfestigkeiten R der Schutzschichten (41, 42) ist,
- wobei die Arbeitsbewehrung (5) wenigstens zwei Arbeitsschichten (51, 52) umfassen, die nicht dehnbare metallische Festigkeitsträger umfassen, die sich von einer Arbeitsschicht zur folgenden überkreuzen und mit einer Umfangsrichtung (XX') des Reifens einen Winkel zwischen 15° und 45° bilden,
- wobei die Versteifungsbewehrung (6) wenigstens eine Versteifungsschicht (61, 62) umfasst, die metallische Festigkeitsträger umfasst, die mit der Umfangsrichtung (XX') einen Winkel bilden, der höchstens gleich 15° ist,
**dadurch gekennzeichnet, dass** der mediane Oberflächenlamellierungsgrad TL_{C} des Laufstreifens (2), definiert als das Verhältnis zwischen der kumulierten Länge L_{DC} der wirksamen Ausschnitte (21), die auf einem medianen Abschnitt des Laufstreifens (2) mit einer axialen Breite, die gleich W_{C} ist, vorhanden sind, und einem medianen Flächeninhalt A_{C} der radial äußeren Fläche (23) des Laufstreifens (2), der gleich 2πR_{E}^{∗}W_{C} ist, wobei R_{E} der Außenradius des Reifens ist, wenigstens gleich 5 m/m² ist, und dadurch, dass das Kopplungsverhältnis C_{C}, definiert als das Verhältnis zwischen dem maximalen Wert Rₘₐₓ der Bruchfestigkeiten R der Schutzschichten (41, 42) und dem medianen Oberflächenlamellierungsgrad TL_{C} des Laufstreifens (2), wenigstens gleich 18000 daN ist.

2. Reifen (1) für ein schweres Fahrzeug vom Typ eines Baufahrzeugs nach Anspruch 1, wobei das Kopplungsverhältnis C_{C} wenigstens gleich 24000 daN ist.

3. Reifen (1) für ein schweres Fahrzeug vom Typ eines Baufahrzeugs nach einem der Ansprüche 1 oder 2, wobei das Kopplungsverhältnis C_{C} höchstens gleich 72000 daN ist.

4. Reifen (1) für ein schweres Fahrzeug vom Typ eines Baufahrzeugs nach einem der Ansprüche 1 bis 3, wobei der mediane Oberflächenlamellierungsgrad TL_{C} wenigstens gleich 5,8 m/m² ist.

5. Reifen (1) für ein schweres Fahrzeug vom Typ eines Baufahrzeugs nach einem der Ansprüche 1 bis 4, wobei der mediane Oberflächenlamellierungsgrad TL_{C} höchstens gleich 15 m/m² ist.

6. Reifen (1) für ein schweres Fahrzeug vom Typ eines Baufahrzeugs nach einem der Ansprüche 1 bis 5, wobei der umfangsbezogene mediane Oberflächenlamellierungsgrad TL_{CX} des Laufstreifens (2), definiert als das Verhältnis zwischen der Summe der Projektionen, auf die Umfangsrichtung (XX'), der Längen der wirksamen Ausschnitte (21), die auf einem medianen Abschnitt des Laufstreifens (2) mit einer axialen Breite, die gleich W_{C} ist, vorhanden sind, und einem medianen Flächeninhalt A_{C} der radial äußeren Fläche (23) des Laufstreifens (2), der gleich 2*π*R_{E}^{∗}W_{C} ist, wobei R_{E} der Außenradius des Reifens ist, wenigstens gleich 2,5 m/m² ist.

7. Reifen (1) für ein schweres Fahrzeug vom Typ eines Baufahrzeugs nach einem der Ansprüche 1 bis 6, wobei der Reifen eine zu seiner Drehachse parallele axiale Richtung (YY') aufweist, wobei der axiale mediane Oberflächenlamellierungsgrad TL_{CY} des Laufstreifens (2), definiert als das Verhältnis zwischen der Summe der Projektionen, auf die axiale Richtung (YY'), der Längen der wirksamen Ausschnitte (21), die auf einem medianen Abschnitt des Laufstreifens (2) mit einer axialen Breite, die gleich W_{C} ist, vorhanden sind, und einem medianen Flächeninhalt A_{C} der radial äußeren Fläche (23) des Laufstreifens (2), der gleich 2πR_{E}^{∗}W_{C} ist, wobei R_{E} der Außenradius des Reifens ist, wenigstens gleich 3,5 m/m² ist.

8. Reifen (1) für ein schweres Fahrzeug vom Typ eines Baufahrzeugs nach einem der Ansprüche 1 bis 7, wobei der maximale Wert Rₘₐₓ der Bruchfestigkeiten R der Schutzschichten (41, 42) wenigstens gleich 150000 daN/m, vorzugsweise wenigstens gleich 160000 daN/m ist.

9. Reifen (1) für ein schweres Fahrzeug vom Typ eines Baufahrzeugs nach einem der Ansprüche 1 bis 8, wobei die Bruchfestigkeit R der radial äußersten Schutzschicht (41, 42) gleich dem maximale Wert Rₘₐₓ der Bruchfestigkeiten R der Schutzschichten (41, 42) ist.

10. Reifen (1) für ein schweres Fahrzeug vom Typ eines Baufahrzeugs nach einem der Ansprüche 1 bis 9, wobei die Bruchfestigkeit R jeder Schutzschicht (41, 42) gleich dem maximale Wert Rₘₐₓ der Bruchfestigkeiten R der Schutzschichten (41, 42) ist.

11. Reifen (1) für ein schweres Fahrzeug vom Typ eines Baufahrzeugs nach einem der Ansprüche 1 bis 10, wobei der minimale Wert Rₘᵢₙ der Bruchfestigkeiten R der Schutzschichten ein solcher ist, dass das Verhältnis Rₘᵢₙ/TL_{C} wenigstens gleich 18000 daN ist.

12. Reifen (1) für ein schweres Fahrzeug vom Typ eines Baufahrzeugs nach einem der Ansprüche 1 bis 11, wobei die elastischen metallischen Festigkeitsträger der Schutzschichten (41, 42) mehrlitzige Seile sind, die aus einer einzigen Schicht von K Litzen bestehen, wobei K zwischen 3 und 5 liegt, wobei jede Litze aus Metalldrähten besteht.

## Claims

1. Tyre (1) for a heavy vehicle of construction plant type, comprising a tread (2) and a crown reinforcement (3) radially on the inside of the tread (2):
- the tread (2), having a radial thickness H_{T} at least equal to 60 mm, comprising cuts (21) having a radial depth H_{D} and a width W_{D}, and elements in relief (22) separated by the cuts (21),
- at least some of the cuts (21), referred to as effective cuts, having a radial depth H_{D} at least equal to 50% of the radial thickness H_{T} and a width W_{D} at most equal to 20% of the radial depth H_{D},
- the crown reinforcement (3) comprising a protective reinforcement (4), a working reinforcement (5) and a hoop reinforcement (6),
- the protective reinforcement (4), which is radially outermost, comprising two protective layers (41, 42), in contact with one another over a median axial width W_{C}, comprising elastic metallic reinforcers, that form an angle of between 15° and 45° with the circumferential direction (XX'), each protective layer (41, 42) having a breaking strength R per unit of layer width, expressed in daN/m, Rₘₐₓ being the maximum value of the breaking strengths R of the protective layers (41, 42),
- the working reinforcement (5) comprising at least two working layers (51, 52), comprising inextensible metallic reinforcers that are crossed from one working layer to the next and form an angle of between 15° and 45° with a circumferential direction (XX') of the tyre,
- the hoop reinforcement (6) comprising at least one hooping layer (61, 62), comprising metallic reinforcers that form an angle at most equal to 15° with the circumferential direction (XX'),
**characterized in that** the median degree of surface siping TL_{C} of the tread (2), defined as the ratio between the cumulative length L_{DC} of the effective cuts (21), present on a median portion of tread (2) having an axial width equal to W_{C}, and a median area A_{C} of the radially outer surface (23) of the tread (2) equal to 2ΠR_{E}^{∗}W_{C}, where R_{E} is the external radius of the tyre, is at least equal to 5 m/m² **and in that** the coupling ratio C_{C}, defined as the ratio between the maximum value Rₘₐₓ of the breaking strengths R of the protective layers (41, 42) and the median degree of surface siping TL_{C} of the tread (2), is at least equal to 18 000 daN.

2. Tyre (1) for a heavy vehicle of construction plant type according to Claim 1, **wherein** the coupling ratio C_{C} is at least equal to 24 000 daN.

3. Tyre (1) for a heavy vehicle of construction plant type according to either of Claims 1 and 2, **wherein** the coupling ratio C_{C} is at most equal to 72 000 daN.

4. Tyre (1) for a heavy vehicle of construction plant type according to any one of Claims 1 to 3, **wherein** the median degree of surface siping TL_{C} is at least equal to 5.8 m/m².

5. Tyre (1) for a heavy vehicle of construction plant type according to any one of Claims 1 to 4, **wherein** the median degree of surface siping TL_{C} is at most equal to 15 m/m².

6. Tyre (1) for a heavy vehicle of construction plant type according to any one of Claims 1 to 5, **wherein** the circumferential median degree of surface siping TL_{CX} of the tread (2), defined as the ratio between the sum of the projections, in the circumferential direction (XX'), of the lengths of the effective cuts (21), present on a median portion of tread (2) having an axial width equal to W_{C}, and a median area A_{C} of the radially outer surface (23) of the tread (2) equal to 2ΠR_{E}^{∗}W_{C}, where R_{E} is the external radius of the tyre, is at least equal to 2.5 m/m².

7. Tyre (1) for a heavy vehicle of construction plant type according to any one of Claims 1 to 6, the tyre having an axial direction (YY') parallel to its axis of rotation, **wherein** the axial median degree of surface siping TL_{CY} of the tread (2), defined as the ratio between the sum of the projections, in the axial direction (YY'), of the lengths of the effective cuts (21), present on a median portion of tread (2) having an axial width equal to W_{C}, and a median area A_{C} of the radially outer surface (23) of the tread (2) equal to 2ΠR_{E}^{∗}W_{C}, where R_{E} is the external radius of the tyre, is at least equal to 3.5 m/m².

8. Tyre (1) for a heavy vehicle of construction plant type according to any one of Claims 1 to 7, **wherein** the maximum value Rₘₐₓ of the breaking strengths R of the protective layers (41, 42) is at least equal to 150 000 daN/m, preferably at least equal to 160 000 daN/m.

9. Tyre (1) for a heavy vehicle of construction plant type according to any one of Claims 1 to 8, **wherein** the breaking strength R of the radially outermost protective layer (41, 42) is equal to the maximum value Rₘₐₓ of the breaking strengths R of the protective layers (41, 42).

10. Tyre (1) for a heavy vehicle of construction plant type according to any one of Claims 1 to 9, **wherein** the breaking strength R of each protective layer (41, 42) is equal to the maximum value Rₘₐₓ of the breaking strengths R of the protective layers (41, 42).

11. Tyre (1) for a heavy vehicle of construction plant type according to any one of Claims 1 to 10, **wherein** the minimum value Rₘᵢₙ of the breaking strengths R of the protective layers is such that the ratio Rₘᵢₙ/TL_{C} is at least equal to 18 000 daN.

12. Tyre (1) for a heavy vehicle of construction plant type according to any one of Claims 1 to 11, **wherein** the elastic metallic reinforcers of the protective layers (41, 42) are multistrand ropes, made up of a single layer of K strands, K being between 3 and 5, each strand being made up of metal threads.
